# EUROPEAN PATENT APPLICATION

(11) **EP 1 327 608 A1**
(43) Date of publication of application: **16.07.2003**
(21) Application number: 03000058.2
(22) Date of filing: 07.01.2003
(51) Int. Cl.: C02F 1/461, C02F 1/463, C02F 1/467, C02F 1/48, C02F 1/465

(54) **Apparatus and method for electrolytic treatment of waste water**

(30) Priority: 15.01.2002 JP 2002005916
(71) Applicant: Japan Society for the Promotion of Science, Tokyo (JP)
(72) Inventor: Watanabe, Tsuneo, Tokyo Metropolitan University, Hachioji City, Tokyo (JP); Ihara, Ikkou, Tokyo Metropolitan University, Hachioji City, Tokyo (JP); Kanamura, Kiyoshi, Tokyo Metropolitan University, Hachioji City, Tokyo (JP); Kanamori, Iori, Tokyo Metropolitan University, Hachioji City, Tokyo (JP)
(74) Representative: von Hellfeld, Axel, Dr. Dipl.-Phys.

(57) **Abstract**

Waste water to be treated is introduced into a first electrolytic bath, and then, hydroxide iron particles are supplied into the waste water through the electrolysis reaction at iron electrodes. Impurities such as organic compounds, phosphoric compounds, persistent compounds and the like are physically absorbed onto the hydroxide iron particles. Then, the hydroxide iron particles (flocks) with absorbed impurities are discharged via a drain valve, to purify the waste water to some degree. The waste water is introduced into a second electrolytic bath with a water pump. In the second electrolytic bath, the remnant impurities in the waste water are chemically dissolved and removed through the oxidation reduction reaction between the surfaces of metallic oxide electrodes and the waste water.

## Description

### Background of the Invention

### Field of the Invention

This invention relates to an apparatus and a method for treating waste water, which are preferably usable for treating waste water including much organic compounds, persistent compounds and the like.

### Description of the prior art

Recently, treating industrial waste grows into a serious problem as industrial level and living level are developed. Particularly, it is an urgent problem from the view of environmental problem to purify waste water discharged in various industrial processes and leachate (ground water) discharged from in landfill. Conventionally, such a purification process is carried out by means of biochemical process using microorganism or physicochemical process using chemicals.

With the above-mentioned biochemical process and physicochemical process, however, waste water including organic compounds, phosphoric compounds, persistent compounds and the like can not be purified sufficiently. In addition, with the biochemical process, it takes long time of period and large space is required in order to maintain much microorganism.

### Summery of the Invention

It is an object of the present invention, in this point of view, to provide a new apparatus and a new method for treating waste water, whereby waste water including organic compounds, phosphoric compounds, persistent compounds and the like can be purified sufficiently.

In order to achieve the above object, this invention relates to an apparatus for treating waste water, comprising:
a first electrolytic bath in which iron electrodes are disposed, and
a second electrolytic bath in which metallic oxide electrodes are disposed and which is located backward from the first electrolytic bath.

In the waste water-treating apparatus of the present invention, waste water is introduced into the first electrolytic bath and the second electrolytic bath in turn, to be purified and discharged.

In the first electrolytic bath, iron hydroxide particles are supplied into the waste water through the electrolytic reaction by applying a given voltage between the iron electrodes. In this case, impurities such as organic compounds and phosphoric compounds in the waste water are physically absorbed onto the iron hydroxide particles. Moreover, the phosphoric compounds are turned into phosphoric irons to form flocks. As a result, in the waste water are suspended the hydroxide iron particles and the phosphoric iron particles (flocks). The resulting suspension components in the waste water is filtered and discharged through a given outlet, so that the waste water is purified to some degrees.

Then, the waste water is introduced into the second electrolytic bath from the first electrolytic bath. In the second electrolytic bath, remnant impurities in the waste water are chemically dissolved through the oxidation reduction reaction between the surfaces of the metallic oxide electrodes and the waste water by applying a given voltage between the metallic oxide electrodes. In this case, impurities such as organic compounds, phosphoric compounds, persistent compounds and the like are chemically dissolved and thus, removed substantially. As a result, the waste water can be purified substantially.

In a preferred embodiment of the present invention, a settling bath is provided in between the first electrolytic bath and the second electrolytic bath. The phosphoric iron particles (flocks) can be settled and removed to some degree in the first electrolytic bath, but much flocks can not be removed if the waste water includes much impurities to create much flocks. In this case, with the settling bath, much flicks can be settled and removed sufficiently.

In another embodiment of the present invention, a magnetic filtering bath is provided in between the first electrolytic bath and the second electrolytic bath. As mentioned above, the phosphoric iron particles (flocks) can be settled and thus, removed to some degree in the first electrolytic bath, but in leachate, the impurities of smaller relative density can not be removed sufficiently. Also, even in the waste water, the small amount of impurities can not be removed sufficiently in the first electrolytic bath.

In many cases, the not settled remnant phosphoric iron particles (flocks) and hydroxide iron particles have magnetic properties. Therefore, if the magnetic particles are introduced into the magnetic filtered bath, they can be magnetically removed. As a result, the flocks and the hydroxide iron particles can be removed effectively to purify the waste water sufficiently. Subsequently, the waste water can be purified almost perfectly through the chemical dissolution in the second electrolytic bath.

In the present invention, both of the settling bath and the magnetic filtered bath may be provided. In this case, impurities such as flocks and hydroxide iron particles can be removed more sufficiently from the waste water on the synergy effect of the settling and the magnetic filtering.

A waste water-treating method is characterized by utilizing the above-mentioned waste water-treating apparatus according to the present invention.

According to the present invention, the waste water including organic compounds, phosphoric compounds, persistent compounds and the like can be purified sufficiently, which is difficult in conventional technique.

### Brief Description of the Drawings

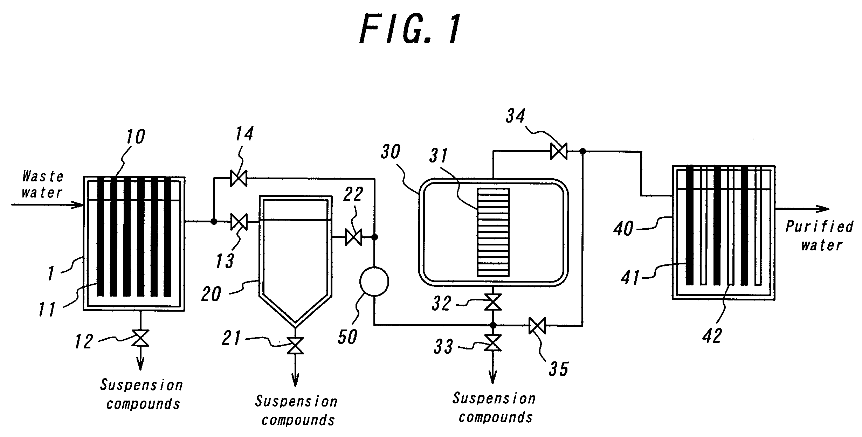

For better understanding of the present invention, reference is made to the attached drawings, wherein
Fig. 1 is a schematic view showing a waste water-treating apparatus.

### Description of the Preferred Embodiments

This invention will be described in detail with reference to the accompanying drawings. Fig. 1 is a schematic view showing a waste water-treating apparatus. In the waste water-treating apparatus shown in Fig. 1, the first electrolytic bath 10, the setting bath 20, the magnetic filtered bath 30 and the second electrolytic bath 40 are provided in turn. Waste water to be treated is transported with the water pump 50.

In the first electrolytic bath 10, plural iron electrodes are provided so as to be opposed one another. In the magnetic filtering bath 30, the magnetic filter 31 is installed. The magnetic filter 31 is commercially available. In the second electrolytic bath 40, plural metallic oxide electrodes 41 and plural metallic electrodes 42 are provided so that each metallic oxide electrode is opposed to each metallic electrode. The metallic oxide electrodes 41 may be set anodes and the metallic electrodes 42 may be set cathodes. The metallic electrodes 42 are made of a metallic material with a smaller ionization tendency such as Ti or Pt.

The metallic oxide electrodes 41 may be made of a metallic oxide material, but may be composed of metallic bodies and metallic oxide films laminated on the metallic bodies, respectively. As the metallic oxide material are exemplified lead dioxide, titanium dioxide or tin dioxide.

First, a waste water to be treated is introduced into the first electrolytic bath 10, where a given voltage is applied to the iron electrodes 11 to bring about electrolysis reaction between the electrodes 11 and the waste water. Thereby, hydroxide iron particles are created and supplied into the waste water. In this case, impurities such as organic compounds and phosphoric compounds in the waste water are absorbed onto the hydroxide iron particles to some degree. As a result, in the waste water are suspended the hydroxide iron particles absorbing impurities and phosphoric iron particles (flocks). The resulting suspension components such as flocks are discharged through the drain valve 12, thereby to purify the waste water to some degree.

Then, the waste water is introduced into the settling bath 20 with opening the valves 13 and 22, and closing the valve 14. In the settling bath 20, the remnant flocks not sufficiently settled and removed from the first electrolytic bath are settled and discharged from the drain valve 21.

As mentioned above, if the waste water includes much impurities, the suspended flocks can not be settled and removed in the first electrolytic bath 10. With the settling bath 20, however, the remnant flocks can be settled and removed. Therefore, with the chemical dissolution in the subsequent second electrolytic bath, the waste water can be purified almost perfectly.

If the valve 13 is closed and the valve 14 is opened, the waste water can be directly introduced into the magnetic filtering bath 30 or the second electrolytic bath 40 from the first electrolytic bath 10 bypassing the settling bath 20. The bypassing introduction will be effective when the waste water includes relatively small amount of impurities because the resulting suspension components such as phosphoric iron particles (flocks) can be settled and removed sufficiently in the first electrolytic bath 10. In this case, the entire treating processes can be simplified, and the treating period can be shortened.

Then, the waste water from or bypassing the settling bath 20 is introduced into the magnetic filtering bath 30 with opening the valves 32 and 34 and closing the valve 35 with the water pump 50. In the magnetic filtering bath 30, the remnant hydroxide iron particles with absorbed impurities thereon and the phosphoric iron particles (flocks) are filtered and removed magnetically with the magnetic filter 31. Concretely, since the remnant hydroxide iron particles and the flocks have magnetic properties, they can be absorbed and removed magnetically with the magnetic filter 31. The resulting absorbed suspension components are discharged via the drain valve 33.

As mentioned above, in leachate, the impurities of smaller relative density can not be removed sufficiently in the first electrolytic bath 10 and the settling bath 20. Also, even in the waste water, the small amount of impurities can not be removed sufficiently in the first electrolytic bath 10 and the settling bath 20. Therefore, if the waste water is introduced into the magnetic filtering bath 30, the remnant suspension components such as flocks created from the impurities included in the waste water can be magnetically filtered and removed sufficiently. As a result, the waste water can be purified sufficiently. Through the chemical dissolution in the second electrolytic bath 40, the dissoluble impurities can be removed effectively to purify the waste water almost perfectly.

If the valve 32 is closed and the valve 35 is opened, the waste water can be directly introduced into the second electrolytic bath 40 from the first electrolytic bath 10 and the settling bath 20 bypassing the magnetic filtering bath 30. The bypassing introduction will be effective when the waste water does not almost includes impurities of smaller relative density because the resulting suspension components such as phosphoric iron particles (flocks) can be settled and removed sufficiently in the first electrolytic bath 10 and the settling bath 20. In this case, the entire treating processes can be simplified, and the treating period can be shortened.

Then, the waste water from or bypassing the magnetic filtering bath 30 is introduced into the second electrolytic bath 40 with the water pump 50. In the second electrolytic bath 40, a given voltage is applied between each pair of the metallic oxide electrodes 41 and the metallic electrodes 42 to bring about oxidation reduction reaction between the surfaces of the metallic oxide electrodes 41 and the waste water. The remnant impurities such as organic compounds, phosphoric compounds, persistent compounds and the like in the introduced waste water are chemically dissolved substantially through the oxidation reduction reaction, to purify the waste water almost perfectly.

### Example:

In Example, leachate in landfill was purified by utilizing the waste water-treating apparatus. Nine pairs of iron electrodes 11 were disposed in the first electrolytic bath 10 by a distance of 30 mm. Each iron electrode was formed in a thickness of 3 mm, a length of 360 mm and a width of 200 mm. Five pairs of metallic oxide electrodes 41 and the metallic electrodes 42 were disposed in the second electrolytic bath 40 by a distance of 30 mm. Each electrode was formed in a thickness of 5 mm, a length of 360 mm and a width of 200 mm. The metallic oxide electrodes 41 were made of laminated lead dioxide (PbO₂) films, and the metallic electrode 42 were made of Ti. The magnetic filter installed in the magnetic filtering bath 30 was composed of magnetic wire type filter commercially available.

A voltage of 6V was applied between each pair of iron electrodes 11 in the first electrolytic bath 10, and a voltage of 7.5V was applied between each pair of metallic oxide electrode 41 and metallic electrode 42, thereby to make an attempt to purify the leachate. The amounts of impurities included in the leachate after and before the purification were listed in Table 1.

**Table 1**

| | CODcr (mg/L) | NH₃-N (mg/L) | T-P (mg/L) |
|---|---|---|---|
| Before purification | 825 | 320 | 0.74 |
| After purification | 5.8 | <1 | 0.08 |

Herein, the notation are defined as follows.
- CODcr:: Amount of organic compounds included in water solution, which is defined by oxygen amount required to convert all of the carbons included in the organic compounds into carbon dioxide gas through combustion
- NH₃-N:: Ammoniacal nitrogen
- T-P :: Total amount of phosphorous included in water solution, which is determined in amount by dissolving phosphoric compounds into ortho-phosphates with strong acid or oxidant.

As is apparent from Table 1, with the treating process using the waste water-treating apparatus shown in Fig. 1, CODcr, NH3-N and T-P in the leachate are decreased after the purification, so that it is turned out that organic compounds, phosphoric compounds, ammoniacal persistent compounds and the like are removed sufficiently from the leachate.

Although the present invention was described in detail with reference to the above examples, this invention is not limited to the above disclosure and every kind of variation and modification may be made without departing from the scope of the present invention.

As mentioned above, according to the present invention, waste water including organic compounds, phosphoric compounds, persistent compounds and the like can be purified sufficiently.

## Claims

1. An apparatus for treating waste water, comprising:
a first electrolytic bath in which iron electrodes are disposed, and
a second electrolytic bath in which metallic oxide electrodes are disposed and which is located backward from said first electrolytic bath.

2. The treating apparatus as defined in claim 1, wherein in said first electrolytic bath, hydroxide iron particles are supplied into a waste water to be treated through the electrolysis reaction between said iron electrodes and said waste water, and impurities in said waste water are physically absorbed and removed with said hydroxide iron particles.

3. The treating apparatus as defined in claim 1 or 2, wherein in said second electrolytic bath, impurities in said waste water are chemically dissolved and removed through the oxidation reduction reaction between surfaces of said metallic oxide electrodes and said waste water.

4. The treating apparatus as defined in any one of claims 1-3, further comprising a settling bath in between said first electrolytic bath and said second electrolytic bath.

5. The treating apparatus as defined in claim 4, wherein in said settling bath, suspension components from said first electrolytic bath are settled and removed.

6. The treating apparatus as defined in any one of claims 1-3, further comprising a magnetic filtering bath in between said first electrolytic bath and said second electrolytic bath.

7. The treating apparatus as defined in claim 6, wherein in said magnetic filtering bath, said hydroxide iron particles with said absorbed impurities are magnetically filtered and removed from said waste water.

8. The treating apparatus as defined in any one of claims 1-3, further comprising a settling bath and a magnetic filtering bath in turn in between said first electrolytic bath and said second electrolytic bath.

9. The treating apparatus as defined in claim 8, wherein in said settling bath, suspension components from said first electrolytic bath are settled and removed.

10. The treating apparatus as defined in claim 8 or 9, wherein in said magnetic filtering bath, said hydroxide iron particles with said absorbed impurities which are not settled and removed in said settling bath are magnetically filtered and removed from said waste water.

11. A method for treating waste water, comprising the steps of:
supplying hydroxide iron particles which are created through the electrolytic reaction at iron electrodes into a waste water, thereby to physically absorb and remove impurities in said waste water, and
chemically dissolving and removing impurities in said waste water through the oxidation reduction reaction at surfaces of metallic oxide electrodes.

12. A method for treating waste water, comprising the steps of:
supplying hydroxide iron particles which are created through the electrolytic reaction at iron electrodes into a waste water, thereby to physically absorb and remove impurities in said waste water,
settling and removing said hydroxide iron particles with said absorbed impurities, and
chemically dissolving and removing impurities in said waste water through the oxidation reduction reaction at surfaces of metallic oxide electrodes.

13. A method for treating waste water, comprising the steps of:
supplying hydroxide iron particles which are created through the electrolytic reaction at iron electrodes into a waste water, thereby to physically absorb and remove impurities in said waste water,
magnetically filtering and removing said hydroxide iron particles with said absorbed impurities, and
chemically dissolving and removing impurities in said waste water through the oxidation reduction reaction at surfaces of metallic oxide electrodes.

14. A method for treating waste water, comprising the steps of:
supplying hydroxide iron particles which are created through the electrolytic reaction at iron electrodes into a waste water, thereby to physically absorb and remove impurities in said waste water,
settling and removing said hydroxide iron particles with said absorbed impurities,
magnetically filtering and removing remnants of said hydroxide iron particles with said absorbed impurities, and
chemically dissolving and removing impurities in said waste water through the oxidation reduction reaction at surfaces of metallic oxide electrodes.
